(19) Europäisches Patentamt
European Patent Office
Office européen des brevets

(11) **EP 2 218 627 A1**

(12) **EUROPEAN PATENT APPLICATION**
published in accordance with Art. 153(4) EPC

(43) Date of publication:
**18.08.2010 Bulletin 2010/33**

(51) Int Cl.:
**B62D 6/00** $^{(2006.01)}$     **B62D 5/04** $^{(2006.01)}$
**B62D 101/00** $^{(2006.01)}$     **B62D 113/00** $^{(2006.01)}$

(21) Application number: **08859462.7**

(86) International application number:
**PCT/JP2008/072416**

(22) Date of filing: **10.12.2008**

(87) International publication number:
**WO 2009/075295 (18.06.2009 Gazette 2009/25)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.12.2007 JP 2007320618**

(71) Applicant: **Toyota Jidosha Kabushiki Kaisha Toyota-shi, Aichi 471-8571 (JP)**

(72) Inventors:
• **OKAZAKI, Chikara**
  **Toyota-shi**
  **Aichi 471-8571 (JP)**
• **DOI, Takashi**
  **Toyota-shi**
  **Aichi 471-8571 (JP)**

(74) Representative: **Winter, Brandl, Fürniss, Hübner, Röss, Kaiser, Polte - Partnerschaft Bavariaring 10 80336 München (DE)**

(54) **STEERING CONTROL DEVICE**

(57) The steering control device performs a control of applying an assist torque based on a steering by a driver. Concretely, the steering control device sets a transfer function from an inputted steering angle to a wheel turning angle to a predetermined frequency response. Then, the steering control device determines the assist torque corresponding to a steering amount based on the frequency response, a transfer function of the steering angle in a relational formula between the steering angle, the wheel turning angle and the assist torque, and a transfer function of the assist torque in the relational formula. By executing the steering assist based on the determined assist torque, it becomes possible to control the response of the wheel turning angle to the steering angle with high accuracy.

FIG. 1

**Description**

STEERING CONTROL DEVICE

Technical Field

The present invention relates to a steering control device which applies an assist torque based on a steering by a driver.

Background Technique

Conventionally, there is proposed an electric power steering (hereinafter suitably referred to as "EPS") which assists a steering by a driver by using a driving force of a motor. For example, there is disclosed an EPS which assists a steering by using a motor output correcting value determined from a steered angle corresponding value in Patent Reference-1. Additionally, there is disclosed an EPS which sets a feedback function so that the feedback function may be proportional to a transfer function of a side slip angle relative to a steered angle in Patent Reference-2.

However, in the techniques according to Patent Reference-1 and 2, a response of a wheel turning angle to the steering angle is not considered. Thereby, it is impossible to appropriately control the wheel turning angle relative to the steering angle.

Patent Reference-1: Japanese Patent Application Laid-open under No. 2006-298102

Patent Reference-2: Japanese Patent Application Laid-open under No. H7-81599

Disclosure of Invention

PROBLEM TO BE SOLVED BY THE INVENTION

The present invention has been achieved in order to solve the above problem. It is an object of this invention to provide a steering control device capable of appropriately controlling a response of a wheel turning angle to a steering angle.

According to one aspect of the present invention, there is provided a steering control device which performs a control of applying an assist torque based on a steering by a driver including: an assist torque determination unit which sets a transfer function from an inputted steering angle to a wheel turning angle to a predetermined frequency response, and determines the assist torque corresponding to a steering amount based on the frequency response, a transfer function of the steering angle in a relational formula between the steering angle, the wheel turning angle and the assist torque, and a transfer function of the assist torque in the relational formula.

The above steering control device is formed by the electric power steering, for example, and performs a control of applying an assist torque based on a steering by a driver. Concretely, the steering control device sets a transfer function from an inputted steering angle to a wheel turning angle to a predetermined frequency response. Then, the steering control device determines the assist torque corresponding to a steering amount based on the frequency response, a transfer function of the steering angle in a relational formula between the steering angle, the wheel turning angle and the assist torque, and a transfer function of the assist torque in the relational formula. By executing the steering assist based on the determined assist torque, it becomes possible to control the response of the wheel turning angle to the steering angle with high accuracy.

In a preferred example of the above steering control device, the assist torque determination unit calculates an assist torque gain by dividing a difference between the frequency response and the transfer function of the steering angle by the transfer function of the assist torque, and determines the assist torque based on the assist torque gain.

In another preferred example of the above steering control device, the transfer function of the steering angle and the transfer function of the assist torque are determined based on a vehicle specification and a vehicle speed.

In a manner of the above steering control device, the frequency response is determined such that a gain of a transfer function from a rack stroke to the steering angle within a first steering frequency range exceeding a predetermined frequency is smaller than the gain of the transfer function within a second steering frequency range not exceeding the predetermined frequency. Thereby, it is possible to appropriately suppress the vibration by the disturbance, and it becomes possible to improve the steering feeling.

In another manner of the above steering control device, the frequency response within the second steering frequency range is set such that a change of a gain of a transfer function from the steering angle to the rack stroke becomes substantially 0 and a phase-lag between the steering angle and the rack stroke becomes substantially 0.

Preferably, the first steering frequency range is defined by a frequency range corresponding to an input from the rack stroke, and the second steering frequency range is defined by a frequency range corresponding to a steering angle input.

BRIEF DESCRIPTION OF THE DRAWINGS

FIG. 1 is a schematic diagram showing a configuration of the steering control system according to an embodiment;
FIG. 2 is a schematic diagram showing a control block according to the embodiment;
FIGS. 3A and 3B are schematic diagrams modeled on the steering control system;
FIGS. 4A and 4B show the examples of the response of the wheel turning angle to the steering angle;
FIG. 5 shows an example of a time-base response to the steering;
FIGS. 6A and 6B show the examples of the transfer function from the steering angle to the rack stroke; and
FIG. 7 is a schematic diagram showing a control block according to the modification.

BRIEF DESCRIPTION OF THE REFERENCE NUMBER

[0015]

| 1 | Steering wheel |
|---|---|
| 2 | Steering shaft |
| 3 | Steering angle sensor |
| 4 | Torsion bar |
| 5 | Motor |
| 7 | Rack and pinion unit |
| 10F | Wheel (Front wheel) |
| 12 | Vehicle speed sensor |
| 20 | Controller |
| 21 | Assist torque determination unit |
| 50 | Steering control system |

DETAILED DESCRIPTION OF THE PREFERRED EMBODIMENTS

A preferred embodiment of the present invention will be explained hereinafter with reference to the drawings.

[Entire Configuration]

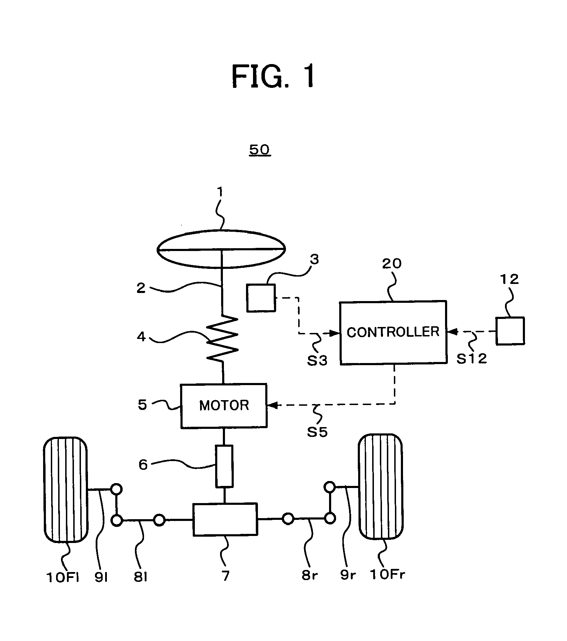

First, a description will be given of an entire configuration of a steering control system 50 to which a steering control device according to the embodiment is applied. FIG. 1 is a schematic diagram showing a configuration of the steering control system 50.

The steering control system 50 includes a steering wheel 1, a steering shaft 2, a steering angle sensor 3, a torsion bar 4, a motor 5, an intermediate shaft 6, a rack and pinion unit 7, tie rods 8r and 8l, knuckle arms 9r and 9l, wheels (front wheels) 10Fr and 10Fl, a vehicle speed sensor 12 and a controller 20. Hereinafter, when "r" and "l" at the end of the reference numerals of the tie rods 8r and 8l, the knuckle arms 9r and 9l, and the wheels 10Fr and 10Fl are used with no distinction, these will be omitted.

The steering control system 50 is formed by the electric power steering (EPS) system. Concretely, the steering control system 50 is mounted on a vehicle. The steering control system 50 controls the drive of the motor 5 for driving the steering of the wheel 10F serving as a steered wheel, and steers the steered wheel in response to the operation of the steering wheel 1.

The steering wheel 1 is operated by the driver for turning the vehicle. The steering wheel 1 is connected to the rack and pinion unit 7 via the steering shaft 2. The steering angle sensor 3, the torsion bar 4, the motor 5, and the intermediate shaft 6 are provided on the steering shaft 2.

The torsion bar 4 twists in response to the input from the steering wheel 1. The motor 5 includes a decelerator and an electric motor, which are not shown, and is controlled by a control signal S5 supplied from the controller 20. Concretely, the motor 5 generates the assist torque (steering assist force) in response to the steering by the driver for improving the steering feeling and the steering stability. Additionally, the motor 5 generates the added damping force for improving the steering stability and the steering feeling. The intermediate shaft 6 deforms by the external force applied from the front side of the vehicle, and absorbs the impact.

The steering angle sensor 3 detects the steering angle corresponding to the operation of the steering wheel 1 by the driver. The steering angle sensor 3 supplies a detecting signal S3 corresponding to the detected steering angle to the controller 20. The vehicle speed sensor 12 detects the vehicle speed, and supplies a detecting signal S12 corresponding to the detected vehicle speed to the controller 20.

The rack and pinion unit 7 includes the rack and the pinion. The rack and pinion unit 7 receives the revolution transmitted from the steering shaft 2, and operates. Additionally, the tie rod 8 and the knuckle arm 9 are connected to the rack and pinion unit 7, and the wheel 10F is connected to the knuckle arm 9. In this case, when the tie rod 8 and the knuckle arm 9 are operated by the rack and pinion unit 7, the wheel 10F connected to the knuckle arm 9 is steered.

The controller 20 includes a CPU, a ROM, a RAM, and an A/D converter, which are not shown. The controller 20 corresponds to an ECU (Electronic Control Unit) in the vehicle. Mainly, the controller 20 supplies the control signal S5 to the motor 5 based on the detecting signal S3 supplied from the steering angle sensor 3 and the detecting signal S12 supplied from the vehicle speed sensor 12, and executes the control of the motor 5. Concretely, the controller 20 executes the process to determine the assist torque that the motor 5 should apply. Namely, the controller 20 corresponds to the steering control device in the present invention, and functions as the assist torque determination unit.

[Assist Torque Determination Method]

Next, a description will be given of the assist torque determination method according to the embodiment. In this embodiment, the controller 20 determines the assist torque that the motor 5 should apply in consideration of the response of the wheel turning angle to the steering angle. Namely, the controller 20 determines the assist torque so that the response of the wheel turning angle to the steering angle is controlled with high accuracy. Concretely, the controller 20 sets a transfer function from the inputted steering angle to the wheel turning angle to a predetermined frequency response, and determines the assist torque by calculating an assist torque gain based on the frequency response.

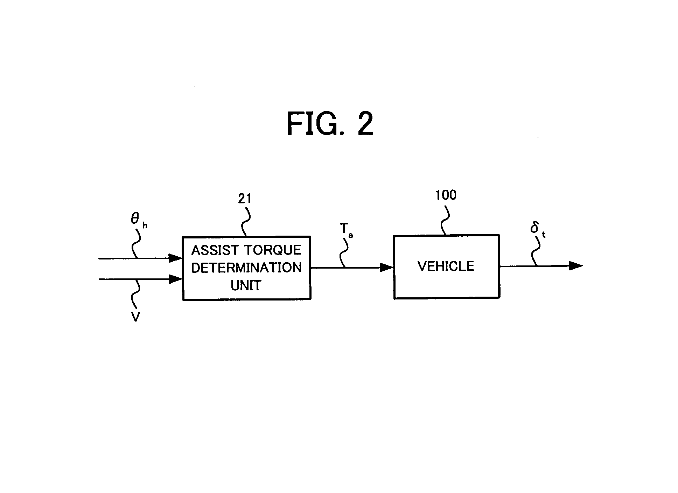

FIG. 2 is a schematic diagram showing a control block according to the embodiment. An assist torque determination unit 21 corresponds to a process unit in the above-mentioned controller 20, and executes the steering assist by a feedforward control. Concretely, the assist torque determination unit 21 obtains the steering angle $\theta_h$ and the vehicle speed V, and determines the assist torque $T_a$ based on these. In details, the assist torque determination unit 21 calculates the assist torque gain based on the frequency response, namely, compensates the gain, and determines the assist torque $T_a$. Then, the assist torque determination unit 21 executes the steering assist based on the determined assist torque $T_a$. In the vehicle 100 including the steering wheel 1, the wheel 10F is steered at the wheel turning angle $\delta_t$ by being subjected to the steering assist based on the assist torque $T_a$ determined by the assist torque determination unit 21.

Next, a concrete description will be given of the assist torque determination method according to the embodiment with using the formula.

The meaning of the characters and the signs described later are as follows.

| | |
|---|---|
| m | Weight of vehicle |
| I | Yaw inertia moment |
| $l_f$ | Distance from front wheel (wheel center of front wheel) to center of gravity |
| $l_r$ | Distance from rear wheel (wheel center of rear wheel) to center of gravity |
| $K_f$ | Equivalent cornering power of front wheel |
| $K_r$ | Equivalent cornering power of rear wheel |
| $\xi$ | Pneumatic trail |
| $F_f$ | Side force of front wheel |
| $F_r$ | Side force of rear wheel |
| $\beta$ | Vehicle body slip angle |
| $\gamma$ | Yaw rate |
| V | Vehicle speed |
| $I_h$ | Inertia moment of steering |
| $K_h$ | Spring constant of torsion bar |
| $C_h$ | Damping coefficient of torsion bar |
| $I_m$ | Inertia moment of motor |
| Ki | Spring constant of intermediate shaft |
| $N_g$ | Motor gear ratio |
| $N_p$ | Steering gear ratio |
| $T_h$ | Steering torque |
| $T_a$ | Assist torque |
| $I_w$ | Inertia moment of wheel |
| K | Assist torque gain |
| $G_1 \sim G_{12}$ | Transfer functions |

| | |
|---|---|
| $G_{gain0}$ | Frequency response |
| g | Gain of transfer function from steering angle to rack stroke |
| φ | Phase between steering angle and rack stroke |
| $θ_h$ | Steering angle (rotation angle of torsion bar) |
| $θ_m$ | Rotation angle of motor |
| $θ_w$ | Rotation angle of terminal portion of intermediate shaft |
| δ | Wheel turning angle |
| s | Laplace operator |

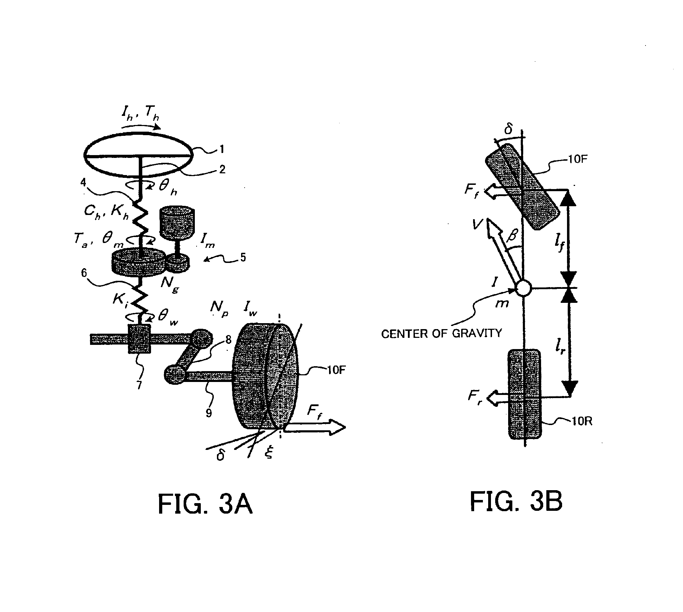

Now, a description will be given of the assist torque determination method, with reference to FIGS. 3A and 3B.

FIGS. 3A and 3B show schematic diagrams modeled on the above-mentioned steering control system 50. Concretely, FIG. 3A shows the model of the steering system. The inertia moment of the steering wheel 1 is "$I_h$", the spring constant of the torsion bar 4 is "$K_h$", the damping coefficient of the torsion bar 4 is "$C_h$", the inertia moment of the motor 5 is "$I_m$", the motor gear ratio is "$N_g$", and the spring constant of the intermediate shaft 6 is "$K_i$". The steering gear ratio is "Np", and the inertia moment of wheel is "$I_w$". In this case, the steering wheel 1 rotates at the steering angle $θ_h$ (i.e., the torsion bar 4 rotates at the rotation angle $θ_h$), and is applied the torque $T_h$. The motor 5 applies the assist torque $T_a$ and rotates at the rotation angle $θ_m$. The terminal portion of the intermediate shaft 6 rotates at the rotation angle $θ_w$, and the wheel (the front wheel) 10F is steered at the wheel turning angle δ.

FIG. 3B shows the side force $F_f$ which acts on the wheel 10F (the front wheel 10F) and the side force $F_r$ which acts on the wheel 10R (the rear wheel 10R). Concretely, FIG. 3B shows the vehicle speed V, the vehicle body slip angle β, and the side forces $F_f$ and $F_r$ which act on the vehicle whose wheel turning angle of the wheel 10F is δ.

In the above-mentioned vehicle model, the vehicle satisfies the motion equation shown by the equations (1) and (2).

$$mV\dot{β} + 2(K_f + K_r)β + \left[mV + \frac{2}{V}\left(l_f K_f - l_r K_r\right)\right]γ = 2K_f δ \qquad (1)$$

$$2(l_f K_f - l_r K_r)β + I\dot{γ} + \frac{2(K_f l_f^2 + K_r l_r^2)}{V}γ = 2K_f l_f δ \qquad (2)$$

The steering wheel 1 satisfies the equation (3), and the motor 5 satisfies the equation (4).

$$I_h \ddot{θ}_h + K_h(θ_h - θ_m) + C_h(\dot{θ}_h - \dot{θ}_m) = T_h \qquad (3)$$

$$N_g^2 I_m \ddot{θ}_m + K_h(θ_m - θ_h) + C_h(\dot{θ}_m - \dot{θ}_h) + K_i(θ_m - θ_w) = T_a \qquad (4)$$

The Wheel 10F satisfies the equations (5) and (6).

$$I_w \ddot{δ} + K_i(θ_w - θ_m)N_p = 2\xi F_f \qquad (5)$$

$$F_f = K_f\left(β + \frac{l_f}{V}γ - δ\right) \qquad (6)$$

Meanwhile, the steering gear ratio $N_p$ is expressed by the equation (7) by using the rotation angle $θ_w$ of the terminal portion of the intermediate shaft 6 and the wheel turning angle δ.

$$\theta_w = N_p \delta \qquad (7)$$

The equation (7) means the number of revolutions of the terminal portion of the intermediate shaft 6 necessary to make the wheel 10F rotate one revolution.

The equation (8) is obtained by the equation (1) and the equation (2). "$G_1$" and "$G_2$" in the equation (8) correspond to the transfer functions determined by the vehicle specification.

$$\begin{bmatrix} \beta(s) \\ \gamma(s) \end{bmatrix} = \begin{bmatrix} G_1(s) \\ G_2(s) \end{bmatrix} \delta(s) \qquad (8)$$

The equation (9) is obtained by substituting the equation (7) for the equation (6). "$G_3$" in the equation (9) corresponds to the transfer function determined by the vehicle specification.

$$F_f(s) = \left( K_f G_1(s) + \frac{K_f l_f}{V} G_2(s) - K_f \right) \delta(s) = G_3(s)\delta(s) \qquad (9)$$

The following equations (10), (11), and (12) are obtained by partially organizing the equations (3), (4), and (5).

$$(I_h s^2 + C_h s + K_h)\theta_h(s) - (K_h + C_h s)\theta_m(s) = T_h(s) \qquad (10)$$

$$-(K_h + C_h s)\theta_h(s) + (N_g^{\,2} I_m s^2 + C_h s + K_h + K_i)\theta_m(s) - K_i N_p \delta = T_a \qquad (11)$$

$$(I_W s^2 + K_i N_p^{\,2})\delta(s) - K_i N_p \theta_m(s) = 2\xi G_3(s)\delta \qquad (12)$$

The equation (13) is obtained by the equation (12). "$G_4$" in the equation (13) corresponds to the transfer function determined by the vehicle specification.

$$\theta_m(s) = -\frac{1}{K_i N_p}\left\{2\xi G_3(s) - (I_W s^2 + K_i N_p)\right\}\delta(s) = G_4(s)\delta(s) \qquad (13)$$

The equation (14) is obtained by organizing the equations (10) to (13). "$G_5$", "$G_6$", "$G_7$", and "$G_8$" in the equation (14) correspond to the transfer functions determined by the vehicle specification.

$$\begin{bmatrix} G_5(s) & 0 \\ G_6(s) & -1 \end{bmatrix}\begin{bmatrix} \theta_h(s) \\ T_a(s) \end{bmatrix} = \begin{bmatrix} 1 & G_7(s) \\ 0 & G_8(s) \end{bmatrix}\begin{bmatrix} T_h(s) \\ \delta(s) \end{bmatrix} \qquad (14)$$

The equation (15) is obtained by organizing the equation (14).

$$\begin{bmatrix} T_h(s) \\ \delta(s) \end{bmatrix} = \begin{bmatrix} 1 & G_7(s) \\ 0 & G_8(s) \end{bmatrix}^{-1} \begin{bmatrix} G_5(s) & 0 \\ G_6(s) & -1 \end{bmatrix} \begin{bmatrix} \theta_h(s) \\ T_a(s) \end{bmatrix} = \begin{bmatrix} G_9(s) & G_{10}(s) \\ G_{11}(s) & G_{12}(s) \end{bmatrix} \begin{bmatrix} \theta_h(s) \\ T_a(s) \end{bmatrix} \quad (15)$$

The equation (15) represents the transfer function from the steering angle $\theta_h$ and the assist torque $T_a$ to the torque $T_h$ of the steering wheel 1 and the transfer function from the steering angle $\theta_h$ and the assist torque $T_a$ to the wheel turning angle $\delta$. Additionally, "$G_9$", "$G_{10}$", "$G_{11}$", and "$G_{12}$" in the equation (15) correspond to the transfer functions determined by the vehicle specification and/or the vehicle speed. Namely, "$G_9$", "$G_{10}$", "$G_{11}$", and "$G_{12}$" are the terms which include the vehicle specification and/or the vehicle speed as the coefficient. In details, "$G_{11}$" corresponds to the transfer function of the steering angle, and "$G_{12}$" corresponds to the transfer function of the assist torque.

According to the equation (15), the relational formula between the steering angle $\theta_h$, the wheel turning angle $\delta$ and the assist torque $T_a$ when the steering assist is performed is expressed by the equation (16) by using the transfer function $G_{11}$ of the steering angle and the transfer function $G_{12}$ of the assist torque.

$$\delta(s) = G_{11}(s)\theta_h(s) + T_a(s)G_{12}(s) \quad (16)$$

Meanwhile, the assist torque $T_a$ is expressed by the equation (17) by using the assist torque gain K. The equation (17) indicates that the steering assist is performed by the feedforward control (refer to FIG. 2), for example.

$$T_a(s) = K(s)\theta_h(s) \quad (17)$$

The equation (17) is substituted for the equation (16), and the obtained equation is organized. Thereby, the equation (18) is obtained.

$$\frac{\delta(s)}{\theta_h(s)} = G_{11}(s) + K(s)G_{12}(s) \quad (18)$$

The equation (18) corresponds to the transfer function from the steering angle $\theta_h$ to the wheel turning angle $\delta$. According to the equation (18), it can be understood that the frequency response of the wheel turning angle $\delta$ to the steering angle $\theta_h$ can arbitrarily be realized by appropriately setting the assist torque gain K.

Next, it is assumed that the transfer function ($\delta(s)/\theta_h(s)$) from the steering angle $\theta_h$ to the wheel turning angle $\delta$ is set to the predetermined frequency response $G_{gain0}$. For example, the frequency response $G_{gain0}$ is set based on the response performance and/or the disturbance response of the rack stroke. The above frequency response $G_{gain0}$ is substituted for the equation (18), and the assist torque gain K is calculated based on the obtained equation. Thereby, the equation (19) is obtained.

$$K(s) = \frac{G_{gain0}(s) - G_{11}(s)}{G_{12}(s)} \quad (19)$$

As shown in the above equation (16), "$G_{11}$" and "$G_{12}$" in the equation (19) correspond to the transfer function of the steering angle and the transfer function of the assist torque, respectively. "$G_{11}$" and "$G_{12}$" are determined by the vehicle specification and/or the vehicle speed (detected by the vehicle speed sensor 12). Thereby, as shown in the equation (19), by appropriately setting the frequency response $G_{gain0}$, the assist torque gain K can be calculated by dividing the difference between the frequency response $G_{gain0}$ and the transfer function $G_{11}$ of the steering angle by the transfer function $G_{12}$ of the assist torque. Then, the assist torque $T_a$ can be determined by substituting the assist torque gain K for the equation (17). The calculations of the equation (19) and the equation (17) are executed by the controller 20 (in details, the assist torque determination unit 21).

By executing the steering assist based on the determined assist torque $T_a$ as described above, it becomes possible to control the response of the wheel turning angle $\delta$ to the steering angle $\theta_h$ with high accuracy.

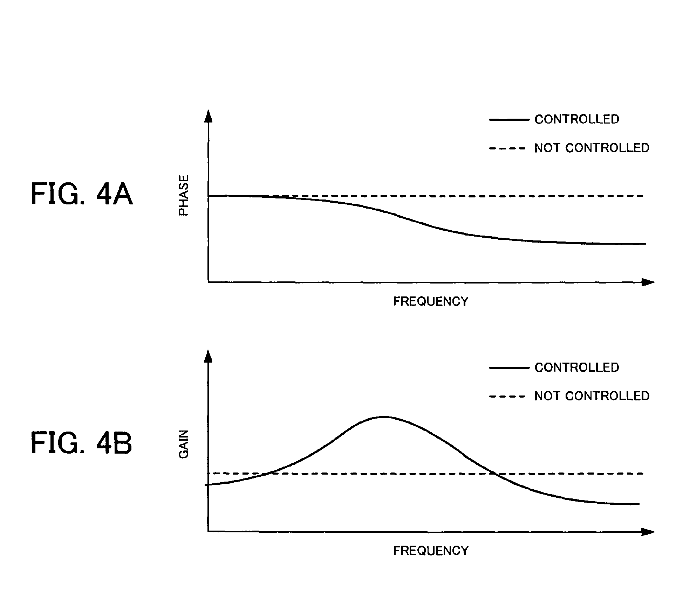

A description will be given of an example of the response of the wheel turning angle to the steering angle in such a case that the control is executed based on the determined assist torque $T_a$ as described above, with reference to FIGS. 4A and 4B. Now, the explanation shows such an example that the frequency response $G_{gain0}$ is set to "$G_{gain0}=1/N_s$". Namely, in such a case that the assist torque gain K is calculated by setting the frequency response $G_{gain0}$ to "$G_{gain0}=1/N_s$", the response of the transfer function "$\delta(s)/\theta_h(s) \times N_s$" is shown. "$N_s$" is the steering gear ratio. The transfer function "$\delta(s)/\theta_h(s)$" is multiplied by the steering gear ratio $N_s$ to make the relationship between the steering angle $\theta_h$ and the wheel turning angle $\delta$ easy to understand.

Concretely, FIG. 4A shows the phase (the phase corresponds to the phase of the wheel turning angle $\delta$ relative to the steering angle $\theta_h$), and FIG. 4B shows the gain (the gain corresponds to "wheel turning angle $\delta$/steering angle $\theta_h$"). In FIGS. 4A and 4B, a horizontal axis shows the frequency, respectively. Additionally, in FIGS. 4A and 4B, solid lines show the graphs in such a case that the control according to the embodiment is executed, and broken lines show the graphs in such a case that the control according to the embodiment is not executed, respectively. In such a case that the control according to the embodiment is executed, it can be understood that the frequency response of the wheel turning angle $\delta$ to the steering angle $\theta_h$ can realize the target characteristics without the influence of the steering frequency.

[Setting Method Of Frequency Response]

Next, a concrete description will be given of the setting method of the above-mentioned frequency response $G_{gain0}$. In this embodiment, the frequency response $G_{gain0}$ is set in consideration of the response performance and/or the disturbance response of the rack stroke in the rack and pinion unit 7. Concretely, a steering frequency range is divided into a first steering frequency range and a second steering frequency range. Then, the frequency response $G_{gain0}$ is set so that a gain of a transfer function from the steering angle to the rack stroke and/or a phase between the steering angle and the rack stroke satisfy the predetermined condition within each steering frequency range.

The first steering frequency range is the frequency range exceeding a predetermined frequency, and the second steering frequency range is the frequency range not exceeding the predetermined frequency. Concretely, the first steering frequency range is defined by the frequency range corresponding to the input from the rack stroke (i.e., disturbance input), and the second steering frequency range is defined by the frequency range corresponding to the steering angle input. For example, the first steering frequency range is substantially the frequency range from 10 (Hz) to 20 (Hz), and the second steering frequency range is the frequency range up to 5 (Hz).

In such a case that the first and second steering frequency ranges are defined as described above, the frequency response $G_{gain0}$ within the first steering frequency range is set such that the gain of the transfer function from the rack stroke to the steering angle becomes small. In other words, the frequency response $G_{gain0}$ is set such that the gain of the transfer function from the steering angle to the rack stroke becomes large. By executing the steering assist based on the above frequency response $G_{gain0}$, it becomes possible to suppress the vibration by the disturbance.

Additionally, the frequency response $G_{gain0}$ within the second steering frequency range is set such that the change of the gain of the transfer function from the steering angle to the rack stroke becomes substantially 0 and the phase-lag between the steering angle and the rack stroke becomes substantially 0. By executing the steering assist based on the above frequency response $G_{gain0}$, it becomes possible to control the response of the wheel turning angle to the steering angle with higher accuracy. Hereinafter, the conditions which the gain of the transfer function from the steering angle to the rack stroke and the phase between the steering angle and the rack stroke should satisfy within the first steering frequency range and the second steering frequency range are referred to as "first condition" and "second condition", respectively.

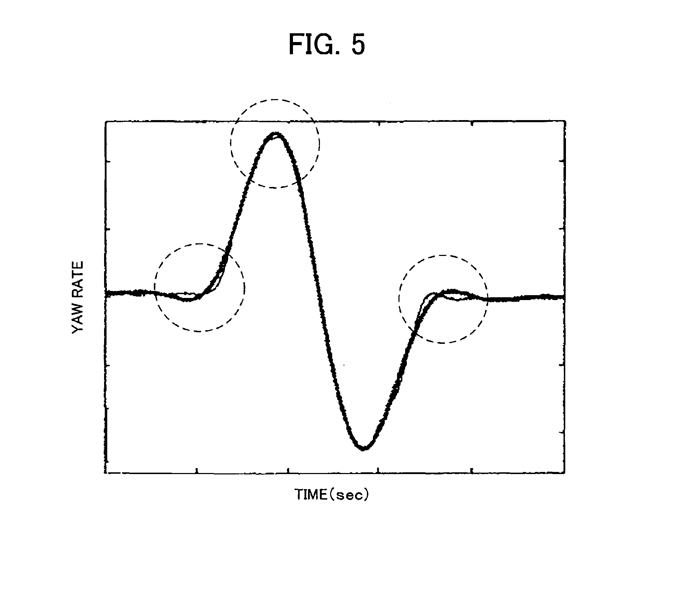

FIG. 5 shows an example of a time-base response to the steering. Concretely, in FIG. 5, a horizontal axis shows the time, and a vertical axis shows the yaw rate. A thin line shows the original data, and a thick line shows the data processed by the low-pass filter of 1.5 (Hz). As shown by the areas drawn in the broken line in FIG. 5, it can be understood that the steering angle contains the component up to 5 (Hz) when drivers execute the steering (for example, when drivers execute the steering for the lane change) . So, in this embodiment, the frequency range up to 5 (Hz) is set as the second steering frequency range corresponding to the steering angle input, as described above.

Next, a description will be given of an example of the frequency response $G_{gain0}$. Now, it is assumed that the frequency response $G_{gain0}$ is set to the second-order lag system so that the above-mentioned conditions of the gain and the phase per the steering frequency ranges are satisfied. Concretely, the frequency response $G_{gain0}$ is expressed by the following equation (20).

$$G_{gain0}(s) = \frac{\omega_n^2}{s^2 + 2\zeta\omega_n s + \omega_n^2} \qquad (20)$$

The gain g and the phase φ relative to the arbitrary angular frequency ω are expressed by the equation (21) and the equation (22), respectively.

$$g(\omega) = -10\log\left[\left\{1-\left(\frac{\omega}{\omega_n}\right)^2\right\}^2 + \left(\frac{2\zeta\omega}{\omega_n}\right)^2\right] \qquad (21)$$

$$\phi(\omega) = -\tan^{-1}\frac{2\zeta}{1-(\omega/\omega_n)^2} \qquad (22)$$

Next, "ζ" and "$\omega_n$" in the equations (21) and (22) are calculated so that the above-mentioned first condition and second condition are satisfied. Namely, "ζ" and "$\omega_n$" are calculated by using the equation (21) and the equation (22) so that the first condition and the second condition are satisfied within the first steering frequency range and the second steering frequency range, respectively.

The first condition is used within the first steering frequency range (the frequency range from 10 (Hz) to 20 (Hz)). Concretely, the first condition is set such that the gain of the transfer function from the rack stroke to the steering angle becomes small within the first steering frequency range. In other words, the gain g of the transfer function from the steering angle to the rack stroke increases within the first steering frequency range. The above first condition is expressed by the equation (23).

$$\begin{cases} 20\pi < \omega_n\sqrt{1-2\zeta^2} < 40\pi \\ 3 < g(20\pi) \\ 3 < g(40\pi) \end{cases} \qquad (23)$$

The second condition is used within the second steering frequency range (the frequency range up to 5 (Hz)). Concretely, the second condition is set such that the gain g of the transfer function from the steering angle to the rack stroke becomes substantially 0 and the phase φ (phase-lag) between the steering angle and the rack stroke becomes substantially 0. The above second condition is expressed by the equation (24).

$$\begin{cases} -1 < g(10\pi) < 1 \\ \phi(10\pi) < -1[\text{deg}] \end{cases} \qquad (24)$$

"ζ" and "$\omega_n$" are calculated so that the conditions shown by the above equations (23) and (24) are satisfied, and the calculated "ζ" and "$\omega_n$" are substituted for the equation (20). Thereby, the frequency response $G_{gain0}$ is set. The above-mentioned controller 20 calculates the assist torque gain K by substituting the frequency response $G_{gain0}$ for the equation (19), and determines the assist torque $T_a$ based on the assist torque gain K. Then, the controller 20 executes the steering assist based on the assist torque $T_a$. Therefore, it becomes possible to control the response of the wheel turning angle to the steering angle with higher accuracy.

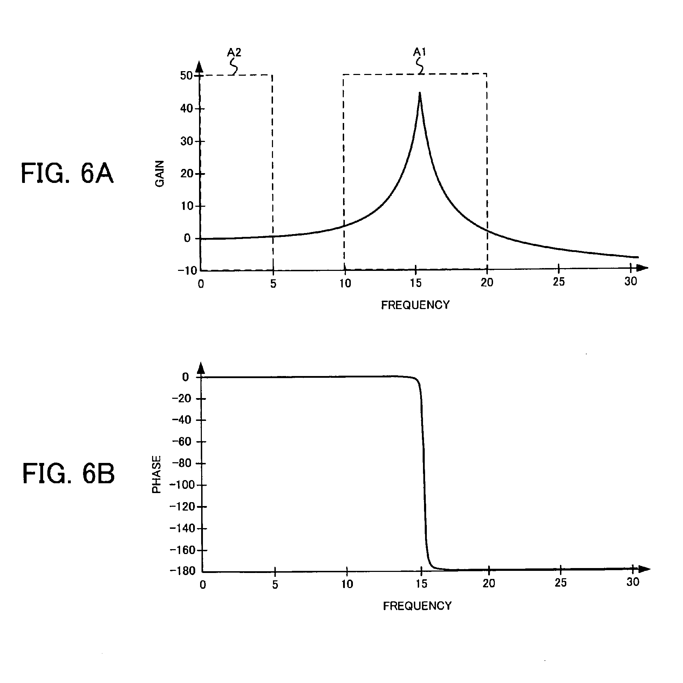

Next, FIGS. 6A and 6B show the examples of the transfer function from the steering angle to the rack stroke in such a case that "ζ" and "$\omega_n$" which may satisfy the above equations (23) and (24) are determined by the sequential search and the calculation is executed by using one of the determined "ζ" and "$\omega_n$". FIG. 6A shows the gain g of the transfer function from the steering angle to the rack stroke, and FIG. 6B shows the phase φ between the steering angle and the rack stroke. In FIGS. 6A and 6B, a horizontal axis shows the frequency, respectively. Additionally, FIGS. 6A and 6B show the graphs in the case that "ζ=0.02" and "$\omega_n$=65".

As shown in FIG. 6A, it can be understood that the gain g of the transfer function from the steering angle to the rack stroke increases within the first steering frequency range shown by the area drawn in the broken line A1. Additionally, it can be understood that the gain g of the transfer function from the steering angle to the rack stroke is substantially 0 within the second steering frequency range shown by the area drawn in the broken line A2. As shown in FIG. 6B, the phase φ (phase-lag) between the steering angle and the rack stroke is substantially 0 within the second steering frequency range.

As described above, in this embodiment, the conditions which the gain g of the transfer function from the steering angle to the rack stroke and the phase φ between the steering angle and the rack stroke should satisfy within the respective range of the first steering frequency range and the second steering frequency range are set, and the frequency response $G_{gain0}$ is set so that the conditions are satisfied. By executing the steering assist based on the assist torque $T_a$ determined by the frequency response $G_{gain0}$, it becomes possible to appropriately control the response of the wheel turning angle to the steering angle. More concretely speaking, the frequency response $G_{gain0}$ within the first steering frequency range is set such that the gain of the transfer function from the rack stroke to the steering angle becomes small. Thereby, by executing the steering assist based on the above frequency response $G_{gain0}$, it is possible to appropriately suppress the vibration by the disturbance, and it becomes possible to improve the steering feeling.

[Modification]

FIG. 1, FIGS. 3A and 3B show a column type EPS. However, the present invention can be applied regardless of the EPS type. Instead of the column type EPS, the present invention can be applied to a rack-coaxial type EPS, for example. Additionally, the present invention can be applied to a steer-by-wire type steering device.

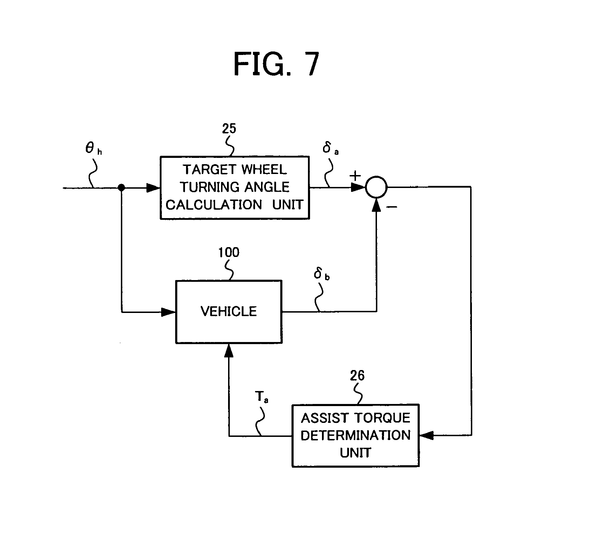

In the above embodiment, the example that the steering assist is executed by the feedforward control is shown (refer to FIG. 2). Instead, the steering assist may be executed by the feedback control. FIG. 7 is a schematic diagram showing a control block according to the modification.

In this case, a target wheel turning angle calculation unit 25 obtains a steering angle $\theta_h$, and calculates a target wheel turning angle $\delta_a$. Concretely, the target wheel turning angle calculation unit 25 calculates the target wheel turning angle $\delta_a$ so that the gain g of the transfer function from the steering angle to the rack stroke and the phase φ between the steering angle and the rack stroke satisfy the first condition and the second condition (refertotheequations (23) and (24)). In the vehicle 100 including the steering wheel 1, the wheel 10F is steered at the wheel turning angle $\delta_b$ by being subjected to the steering assist based on the assist torque $T_a$ determined by the assist torque determination unit 26. The assist torque determination unit 26 determines the assist torque $T_a$ based on the difference between the target wheel turning angle $\delta_a$ calculated by the target wheel turning angle calculation unit 25 and the wheel turning angle $\delta_b$ of the vehicle 100. Then, the assist torque determination unit 26 executes the steering assist based on the determined assist torque $T_a$.

An actual measurement value (true value) detected by a sensor or an estimate value may be used as the wheel turning angle $\delta_b$ of the vehicle 100. The processes executed by the target wheel turning angle calculation unit 25 and the assist torque determination unit 26 are executed by the above-mentioned controller 20.

As described above, in the modification, the steering assist is executed by the feedback control. By the modification, it also becomes possible to control the response of the wheel turning angle to the steering angle with high accuracy.

In still another modification, the assist torque $T_a$ is determined based on the target wheel turning angle $\delta_a$ as described above, and the steering assist can be executed by the feedforward control based on the assist torque $T_a$.

Additionally, the application of the present invention is not limited to the steering device which applies an assist torque based on a steering angle. The present invention can also be applied to a steering device which applies an assist torque based on a steering torque. In this case, a correction amount based on a frequency response of the wheel turning angle to the steering angle is added to a base assist torque determined by the steering torque. Thereby, the assist torque is determined.

INDUSTRIAL APPLICABILITY

This invention can be used for a vehicle including a power steering device which applies an assist torque based on a steering by a driver.

**Claims**

1. A steering control device which performs a control of applying an assist torque based on a steering by a driver, comprising:

    an assist torque determination unit which sets a transfer function from an inputted steering angle to a wheel turning angle to a predetermined frequency response, and determines the assist torque corresponding to a steering amount based on the frequency response, a transfer function of the steering angle in a relational formula between the steering angle, the wheel turning angle and the assist torque, and a transfer function of the assist torque in the relational formula.

2. The steering control device according to claim 1, wherein the assist torque determination unit calculates an assist torque gain by dividing a difference between the frequency response and the transfer function of the steering angle by the transfer function of the assist torque, and determines the assist torque based on the assist torque gain.

3. The steering control device according to claim 1, wherein the transfer function of the steering angle and the transfer function of the assist torque are determined based on a vehicle specification and a vehicle speed.

4. The steering control device according to claim 1, wherein the frequency response is determined such that a gain of a transfer function from a rack stroke to the steering angle within a first steering frequency range exceeding a predetermined frequency is smaller than the gain of the transfer function within a second steering frequency range not exceeding the predetermined frequency.

5. The steering control device according to claim 4, wherein the frequency response within the second steering frequency range is set such that a change of a gain of a transfer function from the steering angle to the rack stroke becomes substantially 0 and a phase-lag between the steering angle and the rack stroke becomes substantially 0.

6. The steering control device according to claim 4, wherein the first steering frequency range is defined by a frequency range corresponding to an input from the rack stroke, and
wherein the second steering frequency range is defined by a frequency range corresponding to a steering angle input.

# FIG. 1

# FIG. 2

$\theta_h$ → **ASSIST TORQUE DETERMINATION UNIT** (21) → $T_a$ → **VEHICLE** (100) → $\delta_t$

$V$ →

FIG. 3A

FIG. 3B

**FIG. 4A**

**FIG. 4B**

## FIG. 5

FIG. 6A

FIG. 6B

# FIG. 7

**INTERNATIONAL SEARCH REPORT**

International application No.

PCT/JP2008/072416

A.  CLASSIFICATION OF SUBJECT MATTER
*B62D6/00*(2006.01)i, *B62D5/04*(2006.01)i, *B62D101/00*(2006.01)n, *B62D113/00* (2006.01)n

According to International Patent Classification (IPC) or to both national classification and IPC

B.  FIELDS SEARCHED

Minimum documentation searched (classification system followed by classification symbols)
B62D6/00-6/10, B62D5/04

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2007-8242 A  (Nissan Motor Co., Ltd.), 18 January, 2007 (18.01.07), Full text; all drawings (Family: none) | 1-6 |
| A | JP 2007-237840 A  (Nissan Motor Co., Ltd.), 20 September, 2007 (20.09.07), Full text; all drawings (Family: none) | 1-6 |
| A | JP 2006-315632 A  (Nissan Motor Co., Ltd.), 24 November, 2006 (24.11.06), Full text; all drawings (Family: none) | 1-6 |

☒  Further documents are listed in the continuation of Box C.        ☐  See patent family annex.

*    Special categories of cited documents:
"A"  document defining the general state of the art which is not considered   to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

Date of the actual completion of the international search
09 March, 2009 (09.03.09)

Date of mailing of the international search report
24 March, 2009 (24.03.09)

Name and mailing address of the ISA/
Japanese Patent Office

Facsimile No.

Authorized officer

Telephone No.

Form PCT/ISA/210 (second sheet) (April 2007)

**INTERNATIONAL SEARCH REPORT**

International application No.

PCT/JP2008/072416

C (Continuation). DOCUMENTS CONSIDERED TO BE RELEVANT

| Category* | Citation of document, with indication, where appropriate, of the relevant passages | Relevant to claim No. |
|---|---|---|
| A | JP 2006-151360 A (Nissan Motor Co., Ltd.), 15 June, 2006 (15.06.06), Full text; all drawings & US 2006/0086560 A1 | 1-6 |
| A | JP 2005-247201 A (Koyo Seiko Co., Ltd.), 15 September, 2005 (15.09.05), Full text; all drawings & WO 2005/085041 A1 & US 2007/0198153 A1 | 1-6 |
| A | JP 2004-216952 A (Koyo Seiko Co., Ltd.), 05 August, 2004 (05.08.04), Full text; all drawings (Family: none) | 1-6 |
| A | JP 2001-334948 A (NSK Ltd.), 04 December, 2001 (04.12.01), Full text; all drawings & WO 2001/089911 A1 & US 2003/0120404 A1 | 1-6 |
| A | JP 2002-274404 A (Toyoda Machine Works, Ltd.), 25 September, 2002 (25.09.02), Full text; all drawings (Family: none) | 1-6 |
| A | JP 2004-338616 A (Toyota Motor Corp.), 02 December, 2004 (02.12.04), Full text; all drawings (Family: none) | 1-6 |
| P,A | JP 2008-94326 A (Toyota Motor Corp.), 24 April, 2008 (24.04.08), Full text; all drawings (Family: none) | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006298102 A

- JP H781599 B